(19) Europäisches Patentamt / European Patent Office / Office européen des brevets

(11) **EP 2 131 595 A1**

(12) **DEMANDE DE BREVET EUROPEEN**

(43) Date de publication:
**09.12.2009 Bulletin 2009/50**

(51) Int Cl.:
***H04N 7/30*** (2006.01)

(21) Numéro de dépôt: **09006990.7**

(22) Date de dépôt: **26.05.2009**

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **05.06.2008 FR 0853714**

(71) Demandeur: **SAGEM COMMUNICATIONS SAS 92848 Rueil Malmaison Cedex (FR)**

(72) Inventeur: **Deschamps, Lionel M.**
**78150 Le Chesnay (FR)**

(74) Mandataire: **Schmit, Christian Norbert Marie**
**SCHMIT CHRETIEN**
**8, place du Ponceau**
**95000 Cergy (FR)**

(54) **Procédé de production d'un flux JPEG**

(57) Pour gagner du temps et de l'espace en mémoire on commence la compression en JPEG d'une image acquise par un scanner (101) dès que le scanner à produit les premières lignes de l'image, et ce même si ces premières lignes correspondent à la fin de l'image. Cela est réalisé par la mise en mémoire du N-1 bloc qui permet de traiter le bloc N. Le parcours des bloc est lui aussi inversé, aussi bien dans une image que dans les composantes colorimétriques de l'image.

Fig. 2

**Description**

La présente invention a pour objet un procédé de production d'un flux JPEG. Le domaine de l'invention est celui de l'acquisition/numérisation d'image et de leur encodage au format JPEG. Plus particulièrement le domaine de l'invention est celui des scanners avancés tel qu'un scanner recto verso par exemple. De tels scanners sont utilisés par des copieurs multifonctions, des scanners et/ou des télécopieurs.

On remarque ici qu'un flux JPEG est destiné à être incorporé dans un fichier JPEG. Un fichier JPEG est alors composé d'un en-tête immédiatement suivi d'un flux JPEG.

Un but de l'invention est de permettre à un scanner de numériser un document recto verso en utilisant le moins de mémoire possible.

Dans l'état de la technique on connaît des scanners recto verso qui permettent de produire une version numérique d'un document sans qu'un utilisateur ait à intervenir pour l'analyse du verso.

Ces scanners recto verso sont de deux types. Un premier type comporte deux capteurs, la feuille passant entre les deux capteurs. Un deuxième type comporte un seul capteur et un mécanisme de retournement du document à numériser. Avec ce deuxième type, le dispositif d'acquisition commence à scanner le verso par le bas de la page, lorsque le recto est numérisé.

Pour ces deux types de scanner, un encodage en JPEG est un encodage par bloc dans lequel chaque bloc dépend du précédent, sauf le premier, et que le premier est celui correspondant au coin supérieur droit de l'image, alors il faut attendre d'avoir une image numérique de tout le verso avant de pourvoir commencer à l'encoder en JPEG. C'est-à-dire qu'il faut prévoir en mémoire de quoi stocker une image de type bitmap couleur à une résolution compatible avec l'application qui a besoin de numériser l'image. Cette image de type bitmap pourra ensuite être encodée en JPEG de manière à être compressée et exploitée par ladite application. Pour une image couleur en vraie couleur, chaque pixel est codé par 3 chiffres, chaque chiffre étant codé sur 8 bits soit 1 octet. On aboutit donc à un fichier très volumineux. La résolution standard d'un fax étant de 1728 points en largeur (21 cm) pour 7.7 points par mm en hauteur, on arrive, pour une page de A4 à :

$$1728 * 7.7 * 297 * 3 = 11\ 855\ 290\ octets$$

soit plus de 11 Mo juste pour stocker l'image en mémoire.

Cette image doit ensuite être à nouveau parcourue pour pouvoir être compressé au format JPEG.

Il y a donc à la fois un gaspillage de mémoire et de temps de traitement. En effet, tout le temps nécessaire pour la numérisation est perdu car les informations requises pour commencer la compression ne sont pas encore disponibles. Pour l'encodage en JPEG, on parle aussi de compression car il s'agit bien d'une réduction, avec perte, de la taille du fichier original.

L'invention résout ces problèmes en procédant à une production d'un flux JPEG en commençant par la fin du fichier. Pour réaliser cela le procédé selon l'invention commence par allouer un espace mémoire destiné à recevoir le flux JPEG final. Le procédé selon l'invention comporte alors des étapes d'acquisition d'information, de réorganisation de l'information et enfin de traitement de l'information. Les étapes de traitement comportent elle des étapes de découpage en bloc de l'information, de détermination d'un ordre de traitement des blocs, de traitement des blocs. Une particularité de l'invention et qu'un bloc ne peut être écrit dans la mémoire destinée à recevoir le flux JPEG que lorsque le suivant à été traité par les étapes précédentes. En effet seule la connaissance du résultat de ce traitement du bloc suivant permet de terminer le traitement d'un bloc.

Il faut ici être particulièrement attentif à la notion de suivant. En effet ici nous avons parlé de suivant dans l'ordre du traitement. Dans l'invention on commence en fait par traiter les derniers blocs de l'image. Le bloc suivant dans l'ordre de traitement est donc le précédent dans l'ordre de l'image, cet ordre de l'image correspondant à l'ordre défini par la norme JPEG utilisée.

L'invention a donc pour objet un procédé de production d'un flux JPEG pour une image produite par des moyens d'acquisition produisant des lignes de P pixels, ladite image étant acquise en commençant par sa partie inférieure, procédé **caractérisé en ce qu**'il comporte les étapes suivantes mise en oeuvre par des moyens de traitement connectés aux moyens d'acquisition:

- allocation d'une zone de mémoire pour y écrire le flux JPEG produit,
- acquisition et lecture de N premières lignes produites par les moyens d'acquisition non déjà lues et enregistrement de ces lignes dans au moins une mémoire de traitement, ladite mémoire de traitement étant structurée comme une table de N lignes,
- réorganisation des lignes dans les au moins une mémoire de traitement,

- structuration d'au moins la mémoire de traitement en blocs,
- détermination d'un ordre de traitement des blocs, cet ordre étant l'inverse de l'ordre de traitement des blocs dans un procédé de production normal d'un flux JPEG, les blocs sont alors numérotés de 1 à K,
- traitement des blocs selon le principe suivant :

- DCT et quantification bloc x, mémorisation du résultat x sous la forme d'un tableau de coefficients :

$$[DC_x, AC1_x, AC2_x, \ldots ACi_x, EOB]$$

- DCT et quantification bloc x-1, mémorisation du résultat sous la forme d'un tableau de coefficients

$$[DC_{x-1}, AC1_{x-1}, AC2_{x-1}, \ldots ACi_{x-1}, EOB]$$

- encodage puis écriture à la fin de la zone mémoire allouée de

$$[DC_x - DC_{x-1}, AC1_x, AC2_x, \ldots ACi_x, EOB]$$

- une fois tous les blocs traités, alignement du flux JPEG obtenu sur l'entête d'un fichier JPEG.

Dans une variante le procédé selon l'invention est aussi **caractérisé en ce que** N et le nombre de mémoire de traitement varient selon la nature des moyens d'acquisition, selon qu'ils sont noir et blanc ou couleurs, et selon le format du flux JPEG à produire, selon en particulier le sous échantillonnage appliqué.

Dans une variante le procédé selon l'invention est aussi **caractérisé en ce que** pour une image en noir et blanc, ou monochrome, le nombre de mémoire de traitement vaut 1 et que N est l'un des nombres de l'ensemble formé par {4, 8, 16}.

Dans une variante le procédé selon l'invention est aussi **caractérisé en ce que** pour une image en couleur le nombre de mémoire de traitement vaut 3.

Dans une variante le procédé selon l'invention est aussi **caractérisé en ce que** N varie selon que la mémoire de traitement correspond à des informations de luminance ou de chrominance, pour la chrominance N vaut 16, pour la luminance N vaut 8 ou 4.

Dans une variante le procédé selon l'invention est aussi **caractérisé en ce que** la réorganisation dépend d'un format de sous échantillonnage et/ou d'un ordre d'acquisition des informations par les moyens d'acquisition.

Dans une variante le procédé selon l'invention est aussi **caractérisé en ce que** l'alignement est réalisé par un décalage vers la gauche du flux obtenu, décalage du nombre de bit nécessaires pour que le premier bit du flux corresponde au début d'un octet en mémoire.

L'invention sera mieux comprise à lecture de la description qui suit et à l'examen des figures qui l'accompagnent. Celles-ci sont présentées à titre indicatif et nullement limitatif de l'invention. Les figures montrent :

- figure 1 : une illustration de moyens utiles à la mise en oeuvre du procédé selon l'invention.
- figure 2 : une illustration d'étape du procédé selon l'invention.

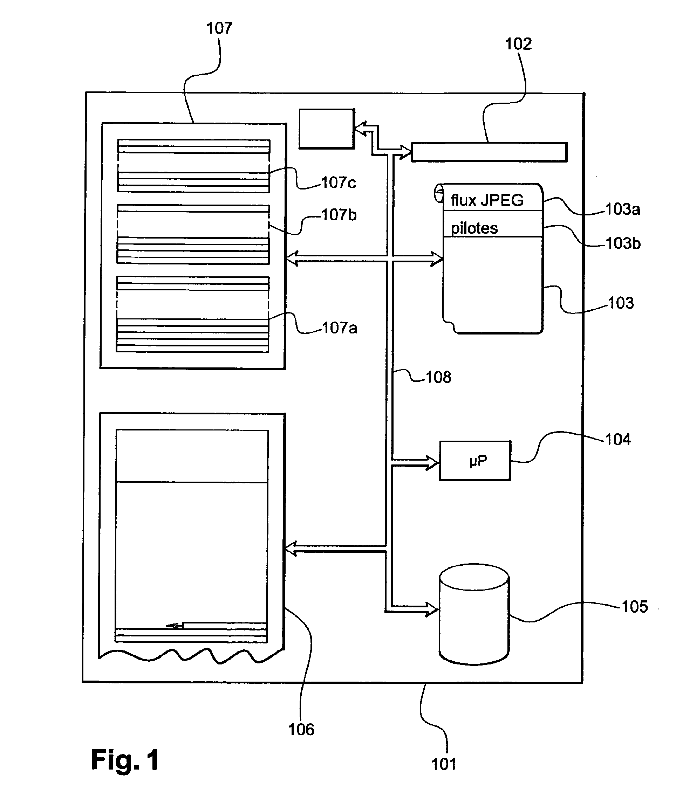

La figure 1 montre un dispositif 101 d'acquisition d'images. Classiquement le dispositif 101 est un scanner produisant des fichiers exploitable par un dispositif de traitement auquel il est connecté. Ce cas de figure est par exemple celui d'un scanner connecté à un ordinateur via un réseau ou tout autre moyen de connexion. Un autre cas de figure est celui d'un dispositif fac-simile devant produire une version électronique d'un document pour l'émettre via un réseau télématique. D'une manière générique on parlera de l'appareil 101.

La figure 1 montre que l'appareil 101 comporte des moyens 102 d'acquisition d'information, une mémoire 103 de programmes, un microprocesseur 104, une unité 105 facultative de stockage de masse, une mémoire 106 d'enregistrement d'un flux JPEG, ou d'un fichier JPEG, et une mémoire 107 de travail. Les éléments 102 à 107 sont interconnectés via un bus 108.

Les moyens 102 sont classiquement un « multi capteurs », c'est-à-dire une barre de capteurs d'une longueur correspondant au standard selon lequel l'appareil 101 doit travailler. Par exemple en Europe occidental le standard le plus répandu pour les documents est le format A4. En général ces documents sont numérisés en mode portrait. La barre de capteurs adaptés pour ce type de mode a une largeur d'environ de 21cm. Dans la pratique, les barres de capteurs permettant de scanner en mode portrait ou paysage ont une largeur d'environ 29,7cm.

Dans le reste de la description, on considère un scanner en mode portrait et donc une barre de capteurs ayant une largeur de 21 cm. Dans un mode de réalisation préféré, le scanner est un dispositif couleur. Cette barre de capteurs à une résolution d'au moins 1728 points pour être compatible avec les applications de fac-similé. Le capteur produit donc des lignes, chaque ligne comportant 1728 triplets de valeurs : une valeur de luminance et deux valeurs de chrominance. Si la barre de capteurs produit des triplets selon un standard RVB alors ces triplets sont transformés en luminance et chrominances, il s'agit en effet du mode de codage qui donne les meilleurs taux de compression avec la compression JPEG.

La mémoire 103 comporte plusieurs zones, chacune comportant des codes instruction correspondant à une fonctionnalité de l'appareil 101. Ainsi lorsque l'on prête une action à un dispositif, celle-ci est en fait effectuée par un microprocesseur du dispositif commandé par des codes instruction enregistrés dans une mémoire de programme dudit dispositif. De même lorsque l'on prête une action à un programme cette action correspond à la mise en oeuvre par un microprocesseur, connecté à une mémoire dans laquelle est enregistré le programme, de tout ou partie des codes instruction formant ledit programme.

Seules les zones de la mémoire 103 intéressant le plus directement l'invention sont représentées.

La mémoire 103 comporte une zone 103a comportant des codes instruction correspondant à la mise en oeuvre du procédé selon l'invention.

La mémoire 103 comporte une zone 103b comportant des codes instruction permettant au microprocesseur 104 de piloter les moyens 102 d'acquisition.

La mémoire 105 permet, dans une variante de l'invention, d'enregistrer le ou les fichiers JPEG produits.

La mémoire 106 est une mémoire destinée à recevoir le flux JPEG au fur et à mesure de sa création. Cette mémoire est remplie par la fin.

La mémoire 107 est une mémoire de travail, elle permet de réorganiser les données produites par les moyens d'acquisition.

La mémoire 107 se subdivise en fait en 3 zones de travail :

- une zone 107a pour la luminance,
- une zone 107b pour la première chrominance,
- une zone 107c pour la deuxième chrominance.

La zone 107a est plus importante, c'est-à-dire comporte plus de lignes, que les zones 107b et 17c, cela correspond à un sous échantillonnage effectué conformément à la norme JPEG.

La représentation des mémoires/zone de travail n'est qu'une illustration d'implantation de composants et d'enregistrement de données. Dans la pratique ces mémoires sont unifiées ou distribuées selon des contraintes de taille de la base de données et/ou de rapidité des traitements souhaités.

Dans le cas d'un traitement de données issues d'un capteur produisant des données en noir et blanc, une seule zone de travail est requise.

Dans le cas de la description on considère une image couleur. La capacité de la zone 107a est N = 16 lignes. Les capacités des zones 107b et 107c sont N / 2 = 8 lignes ou N / 4 = 4 lignes.

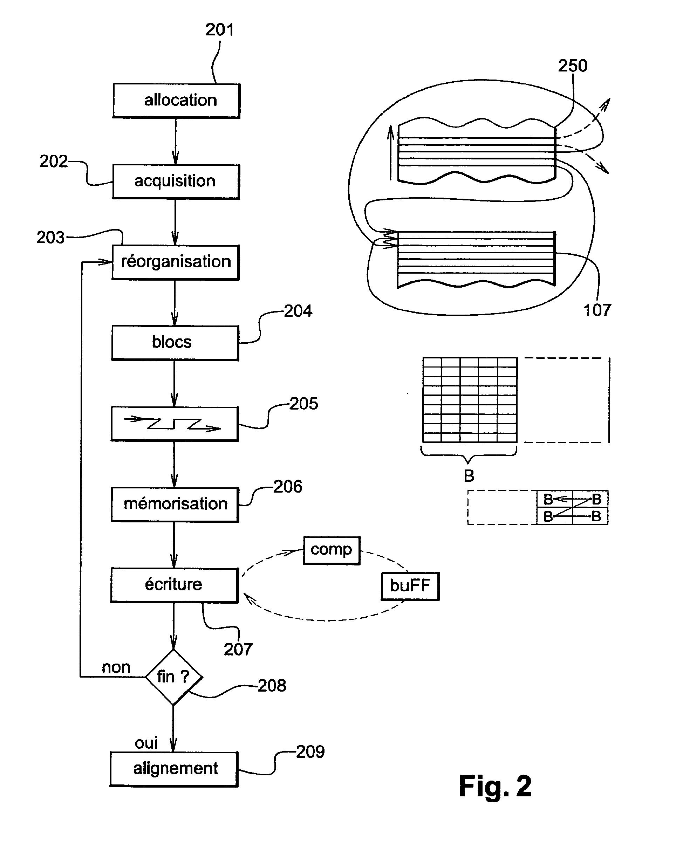

La figure 2 montre une étape 201 d'allocation. Cette étape intervient alors que le recto d'un document biface a déjà été scanné et que l'appareil 101 s'apprête à effectuer le traitement du verso. Ce verso est présenté de manière inversée à la barre de capteurs 102. La mémoire alloué correspond à la place qu'occupera le flux JPEG complet une fois produit. Dans l'exemple de la figure 1 la mémoire 106 comporte aussi une zone correspondant à l'entête du fichier JPEG qui intégrera le flux JPEG, mais cela est une variante de l'invention. La mémoire 106 a une capacité de stockage de préférence supérieure ou sensiblement égale à la taille standard JPEG d'un fac-similé couleur de format A4. La taille standard JPEG d'un fac-similé couleur de format A4 est d'environ 500 Ko.

Une fois la mémoire 106 allouée, c'est-à-dire que cette espace mémoire ne peut plus être utilisée que par le procédé selon l'invention, on passe à une étape 202 d'acquisition.

Dans l'étape 202 les moyens 102 d'acquisition produisent séquentiellement des lignes au fur et à mesure que les moyens 102 sont présentés devant le verso du document à numériser. Ces lignes sont enregistrées, au fur et à mesure de leur production dans une mémoire tampon 250 liée au moyen 102. Cette mémoire 250 tampon est, par exemple, une mémoire tournante ayant une certaine capacité en ligne, capacité supérieure à N. Le principe est alors que les lignes produites par les moyens d'acquisition doivent être traitées rapidement par les moyens 103-104 de traitement de telle sorte que les nouvelles lignes acquises via les moyens d'acquisition n'écrasent les lignes les plus anciennes dans ladite mémoire 250 tampon.

L'étape 202 se déroule parallèlement à une étape 203 de réorganisation. Dans l'étape 203 le microprocesseur lit dans la mémoire 250 tampon des moyens 102, les N lignes les plus anciennes non encore traitées.

Ces N lignes sont ensuite écrites dans les mémoires de traitement. L'intégralité des informations de luminance sont enregistrées dans la mémoire 107a. Les informations de chrominance sont sous échantillonnées selon la norme JPEG.

Si on considère que les lignes sont lues dans la mémoire tampon de bas en haut et de la gauche vers la droite, alors le résultat de cette lecture est écrit dans les mémoires de travail de haut en bas et de la droite vers la gauche. Cela a pour effet d'inverser le renversement à la présentation à l'envers du verso devant les moyens 102. On note ici que ce renversement peut être prévu par les moyens 102, dans ce cas la réorganisation de l'étape 203 est un simple sous échantillonnage, les données étant écrites dans l'ordre dans lequel elles sont lues.

A la fin de l'étape 203 la mémoire 107a comporte 16 lignes de luminance, la mémoire 107b comporte 8 lignes de première chrominance et la mémoire 107c comporte 8 lignes de deuxième chrominance. Cela est lié au mode de sous échantillonnage choisi pour illustrer l'invention. Le nombre de lignes, en particulier de chrominance, peut changer d'une mise en oeuvre à l'autre de l'invention.

La réorganisation des lignes peut être au moins de deux natures :

- soit un déplacement des informations en mémoire pour que leur lecture se fasse selon un ordre naturel, par adresse de mémoire croissante par exemple, par indice de tableau croissante ;
- soit par la détermination d'un ordre de lecture des informations, cet ordre permettant alors d'ordonner les informations ans les déplacer en mémoire.

Après l'étape 203 le microprocesseur 104 passe à une étape 204 de découpage en K blocs des mémoires de travail. Dans notre exemple il s'agit de blocs de 8 x 8. Ce qui convient parfaitement avec la longueur d'une ligne (1728 = 216 x 8) et avec le nombre de lignes, 16 ou 8 selon que l'on considère luminance ou chrominance. Si la résolution de la ligne ne correspondait pas à un multiple entier de la taille d'un bloc, alors la ligne serait virtuellement agrandi du nombre de point manquant pour atteindre le multiple le plus proche.

Dans la description la zone 107a est donc découpé en 2 lignes de K=216 blocs, les mémoires 107b et 107c comporte chacune une ligne de 216 blocs.

Le microprocesseur passe alors à une étape 205 dans laquelle il traite les blocs dans un ordre spécifique. Cet ordre est l'ordre inverse de celui qui serait appliqué s'il s'agissait d'une procédure de production d'un flux JPEG selon la norme.

Dans notre exemple le traitement va donc commencer par 2 blocs de deuxième chrominance, puis 2 blocs de première chrominance, puis 4 blocs de luminance.

Dans une étape 206 les résultats de ces traitements sont mémorisés pour le traitement des blocs suivants.

Dans une étape 207 les résultats des ces traitements sont compressés, pour chaque bloc, selon la norme JPEG puis écrit, en partant de la fin dans la mémoire 106. Le résultat de la compression est une séquence de bits. L'écriture dans la mémoire 106 se fait donc via un alignement sur le dernier bit écrit.

Les traitements appliqués à l'étape 205 sont les suivants, en commençant par le dernier bloc :

- DCT et quantification bloc x, mémorisation du résultat x sous la forme d'un tableau de coefficients :

$$[DC_x, AC1_x, AC2_x, \dots ACi_x, EOB]$$

- DCT et quantification bloc x-1, mémorisation du résultat sous la forme d'un tableau de coefficients

$$[DC_{x-1}, AC1_{x-1}, AC2_{x-1}, \dots ACi_{x-1}, EOB]$$

- encodage puis écriture à la fin de la zone mémoire allouée de

$$[DC_x - DC_{x-1}, AC1_x, AC2_x, \dots ACi_x, EOB]$$

Bien sur les DCT (Discret Cosinus Transform, pour transformée en cosinus discret) et quantification ne sont effectué qu'une fois par bloc, c'est l'utilité de l'étape de mémorisation des résultats.

La DCT et la quantification sont bien connus de l'état de l'art, il suffit de se référer à la page Internet suivante par exemple : http://fr.wikipedia.org/wiki/Compression_JPEG.

De l'étape 207 le microprocesseur passe à une étape 208 dans laquelle il teste si les moyens 102 ont produits de nouvelles lignes. Si oui alors il passe à l'étape 203, sinon il passe à une étape 209 de fin.

Dans l'étape 209 de fin il faut écrire, selon l'étape 207 le dernier bloc traité, c'est-à-dire le premier bloc de l'image redressée. Dans ce cas le microprocesseur encode puit écrit :

$$[DC_1, AC1_1, AC2_1, \ldots ACi_1, EOB]$$

Comme précédemment décrit l'écriture des données compressées se fait par une écriture avec alignement sur le bit. Hors, la mémoire 106 a été alloué en nombre d'octets. Il n'est donc pas garanti que le nombre total de bits écrit lors de la production du flux JPEG corresponde à un nombre d'octet. En d'autres terme les premiers bits du premier octet du flux JPEG produit via les étapes décrites ne correspondent pas forcément à des informations pertinentes c'est-à-dire appartenant à l'image compressée. Il faut donc aligné ce flux sur l'octet pour pouvoir l'intégrer à un fichier JPEG, c'est-à-dire juste derrière une entête d'un fichier JPEG.

La manière la plus simple de réaliser un tel alignement est de décalé tous les octets écrit d'un certain nombre de bits vers la gauche. Dans la mesure ou on connaît le nombre de bits écrits, le certain nombre est lui aussi connu. Cela impose cependant de relire puis de réécrire et de décaler vers la gauche tout le flux JPEG. Cela peut aussi être fait lors d'un transfert du résultat de la compression vers l'unité de stockage 105.

Il existe un autre moyen de réaliser cette opération à moindre frais. Pour le dernier bloc écrit, il suffit d'altérer un des coefficients ACi de manière à ce que le résultat de la compression de ce bloc produise le nombre de bits requis pour obtenir un flux directement aligné sur l'octet. On s'épargne ainsi toute la relecture du flux à seule fin d'aligner ledit flux sur l'octet.

## Revendications

**1.** Procédé de production d'un flux JPEG pour une image produite par des moyens (102) d'acquisition produisant des lignes de P pixels, ladite image étant acquise en commençant par sa partie inférieure, procédé **caractérisé en ce qu'**il comporte les étapes suivantes mise en oeuvre par des moyens (103-104) de traitement connectés aux moyens d'acquisition:

- allocation (201) d'une zone de mémoire(106) pour y écrire le flux JPEG produit,
- acquisition (202) et lecture de N premières lignes produites par les moyens d'acquisition non déjà lues et enregistrement de ces lignes dans au moins une mémoire (250) de traitement, ladite mémoire de traitement étant structurée comme une table de N lignes,
- structuration (204) d'au moins la mémoire de traitement en blocs,
- détermination (205) d'un ordre de traitement des blocs, cet ordre étant l'inverse de l'ordre de traitement des blocs dans un procédé de production normal d'un flux JPEG, les blocs sont alors numérotés de 1 à K,
- traitement des blocs selon le principe suivant :
- DCT et quantification bloc x, mémorisation du résultat x sous la forme d'un tableau de coefficients :

$$[DC_x, AC1_x, AC2_x, \ldots ACi_x, EOB]$$

- DCT et quantification bloc x-1, mémorisation du résultat sous la forme d'un tableau de coefficients

$$[DC_{x-1}, AC1_{x-1}, AC2_{x-1}, \ldots ACi_{x-1}, EOB]$$

- encodage puis écriture à la fin de la zone mémoire allouée de

$$[DC_x - DC_{x-1}, AC1_x, AC2_x, \ldots ACi_x, EOB]$$

- une fois tous les blocs traités, alignement (209) du flux JPEG obtenu sur l'entête d'un fichier JPEG.

**2.** Procédé selon la revendication 1, **caractérisé en ce que** N et le nombre de mémoire de traitement varient selon la nature des moyens d'acquisition, selon qu'ils sont noir et blanc ou couleurs, et selon le format du flux JPEG à produire, selon en particulier le sous échantillonnage appliqué.

**3.** Procédé selon la revendication 2, **caractérisé en ce que** pour une image en noir et blanc, ou monochrome, le nombre de mémoires de traitement vaut 1.

**4.** Procédé selon la revendication 3, **caractérisé en ce que** N est l'un des nombres de l'ensemble formé par {4, 8, 16}.

**5.** Procédé selon la revendication 2, **caractérisé en ce que** pour une image en couleur le nombre de mémoire de traitement vaut 3.

**6.** Procédé selon la revendication 5, **caractérisé en ce que** N varie selon que la mémoire de traitement correspond à des informations de luminance ou de chrominance, pour la chrominance N vaut 8 ou 4, pour la luminance N vaut 16.

**7.** Procédé selon l'une des revendications 1 à 6, **caractérisé en ce que** la réorganisation dépend d'un format de sous échantillonnage et/ou d'un ordre d'acquisition des informations par les moyens d'acquisition.

**8.** Procédé selon l'une des revendications 1 à 7, **caractérisé en ce que** l'alignement est réalisé par un décalage vers la gauche du flux obtenu, décalage du nombre de bits nécessaires pour que le premier bit du flux corresponde au début d'un octet en mémoire.

**Fig. 1**

**Fig. 2**

Europäisches
Patentamt

European
Patent Office

Office européen
des brevets

**RAPPORT DE RECHERCHE EUROPEENNE**

Numéro de la demande

EP 09 00 6990

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | KR 2006 0062634 A (SAMSUNG ELECTRONICS CO LTD [KR]) 12 juin 2006 (2006-06-12) * le document en entier * | 1-8 | INV. H04N7/30 |
| Y | US 2006/228030 A1 (HADADY CRAIG E [US]) 12 octobre 2006 (2006-10-12) * alinéas [0001] - [0007] * * alinéas [0015] - [0021] * * alinéa [0024] * * alinéa [0026] * * alinéa [0030] * * figures 1,4 * | 1-8 | |
| A | EP 1 843 571 A (SONY CORP [JP]) 10 octobre 2007 (2007-10-10) * alinéas [0006] - [0012] * * alinéas [0014] - [0019] * * alinéas [0022] - [0033] * * alinéas [0044] - [0048] * * alinéas [0057] - [0063] * * alinéas [0072] - [0088] * * alinéas [0101] - [0114] * * figures 8,24A-24C,30,31 * | 1-8 | |
| A | US 2007/237412 A1 (MIZUNO YUSUKE [JP]) 11 octobre 2007 (2007-10-11) * alinéas [0004] - [0019] * * alinéa [0047] * * alinéa [0051] * * alinéa [0057] * * alinéas [0063] - [0088] * * alinéas [0118] - [0121] * | 1-8 | |

DOMAINES TECHNIQUES RECHERCHES (IPC)

H04N
G06T

-/--

Le présent rapport a été établi pour toutes les revendications

| Lieu de la recherche | Date d'achèvement de la recherche | Examinateur |
|---|---|---|
| La Haye | 22 juillet 2009 | André, Thomas |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P04C02)

**Europäisches Patentamt**
**European Patent Office**
**Office européen des brevets**

# RAPPORT DE RECHERCHE EUROPEENNE

Numéro de la demande

EP 09 00 6990

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 4 658 430 A (ANDERSON KAREN L [US] ET AL) 14 avril 1987 (1987-04-14) <br> * colonne 2, ligne 7-44 * <br> * colonne 3, ligne 7-12 * <br> * colonne 4, ligne 6-48 * <br> * colonne 5, ligne 21 - colonne 7, ligne 35 * <br> ----- | 1-8 | |
| A | JP 2004 253826 A (MATSUSHITA ELECTRIC IND CO LTD) 9 septembre 2004 (2004-09-09) <br> * pages 21-22, sections 3.3-3.5 * <br> ----- | 1-8 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 22 juillet 2009 | André, Thomas |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 00 6990

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-07-2009

| Document brevet cité au rapport de recherche | | Date de publication | Membre(s) de la famille de brevet(s) | | Date de publication |
|---|---|---|---|---|---|
| KR 20060062634 | A | 12-06-2006 | AUCUN | | |
| US 2006228030 | A1 | 12-10-2006 | AUCUN | | |
| EP 1843571 | A | 10-10-2007 | JP | 4151684 B2 | 17-09-2008 |
| | | | JP | 2006238407 A | 07-09-2006 |
| | | | WO | 2006080240 A1 | 03-08-2006 |
| | | | KR | 20070104358 A | 25-10-2007 |
| | | | US | 2008123970 A1 | 29-05-2008 |
| US 2007237412 | A1 | 11-10-2007 | JP | 2007282020 A | 25-10-2007 |
| US 4658430 | A | 14-04-1987 | CA | 1238726 A1 | 28-06-1988 |
| | | | DE | 3587107 D1 | 25-03-1993 |
| | | | DE | 3587107 T2 | 12-08-1993 |
| | | | EP | 0188678 A2 | 30-07-1986 |
| | | | JP | 2569307 B2 | 08-01-1997 |
| | | | JP | 61156483 A | 16-07-1986 |
| JP 2004253826 | A | 09-09-2004 | AUCUN | | |

EPO FORM P0460

Pour tout renseignement concernant cette annexe : voir Journal Officiel de l'Office européen des brevets, No.12/82